# EUROPÄISCHE PATENTSCHRIFT

(11) **EP 2 986 128 B1**
(45) Veröffentlichungstag und Bekanntmachung des Hinweises auf die Patenterteilung: **30.08.2017**
(21) Anmeldenummer: 14719652.1
(22) Anmeldetag: 08.04.2014
(51) Int. Cl.: A22C 25/12, A22C 25/16

(54) **VORRICHTUNG UND VERFAHREN ZUM MASCHINELLEN BEARBEITEN VON SCHWANZ VORAUS IN TRANSPORTRICHTUNG T AUF EINEM TRANSPORTWEG TRANSPORTIERTEN, GEKÖPFTEN UND ZUMINDEST IM WESENTLICHEN ENTWEIDETEN FISCHEN**
DEVICE AND METHOD FOR MACHINE PROCESSING OF BEHEADED AND AT LEAST SUBSTANTIALLY GUTTED FISH, TRANSPORTED TAIL-FIRST IN TRANSPORT DIRECTION T ON A TRANSPORT PATH
DISPOSITIF ET PROCÉDÉ DE TRAITEMENT MÉCANIQUE DE POISSONS TRANSPORTÉS QUEUE PAR L'AVANT DANS LA DIRECTION DE TRANSPORT T SUR UN TRAJET DE TRANSPORT, ÉTÊTÉS ET AU MOINS SENSIBLEMENT VIDÉS

(30) Priorität: 19.04.2013 DE 102013103995
(43) Veröffentlichungstag der Anmeldung: 24.02.2016
(73) Patentinhaber: Nordischer Maschinenbau Rud. Baader GmbH + Co. KG, 23560 Lübeck (DE)
(72) Erfinder: JÜRS, Michael, 23730 Neustadt (DE); SCHROEDER, Matthias, 23619 Badendorf (DE); BRANDT, Manfred, 23564 Lübeck (DE)
(74) Vertreter: Stork Bamberger Patentanwälte PartmbB
(86) Internationale Anmeldenummer: PCT/EP2014/056990
(87) Internationale Veröffentlichungsnummer: WO 2014/170163

(56) Entgegenhaltungen:
- US-A- 4 084 294
- US-A- 5 088 958
- US-A- 5 520 576
- US-A1- 2010 255 767

## Beschreibung

Die Erfindung betrifft eine Vorrichtung, ausgebildet und eingerichtet zum maschinellen Bearbeiten von Schwanz voraus in Transportrichtung T auf einem Transportweg transportierten, geköpften und zumindest im Wesentlichen entweideten Fischen, umfassend ein die Fische längs des Transportwegs förderndes Fördermittel sowie eine Schneideinrichtung zum Ablösen des Fleisches von den Flankengräten des Grätengerüsts eines Fisches nach dem Freischneiden der Bauch- und Rückenspeichen, wobei die Schneideinrichtung ein Paar rotierend um einen Drehpunkt antreibbare Kreismesser umfasst, die auf einander gegenüberliegenden Seiten des Transportwegs angeordnet und in Bezug auf die Position zum Fisch und damit zum Grätengerüst einstellbar ausgebildet sind.

Des Weiteren betrifft die Erfindung ein Verfahren zum maschinellen Bearbeiten von geköpften und zumindest im Wesentlichen entweideten Fischen, bei denen die Bauchspeichen und Rückenspeichen bereits freigeschnitten sind, umfassend die Schritte: Transportieren des Fisches Schwanz voraus in Transportrichtung T längs eines Transportweges mittels eines Fördermittels, und Ablösen des Fleisches von den Flankengräten des Grätengerüsts des Fisches mittels einer Schneideinrichtung, indem zu beiden Seiten des Fisches jeweils ein rotierendes Kreismesser der Schneideinrichtung zwischen den Flankengräten und dem abzulösenden Fleisch oberhalb der Flankengräten in den Fisch bis zur Haupt- bzw. Mittelgräte des Grätengerüsts eingeführt wird.

Solche Vorrichtungen und Verfahren kommen in der Fisch verarbeitenden Industrie zum Einsatz, um Fische, die bereits geköpft und im Wesentlichen entweidet sind und bei denen die Bauchspeichen und die Rückenspeichen bereits freigeschnitten sind, zu bearbeiten. Anders ausgedrückt dienen die Vorrichtung und das Verfahren dazu, das Fleisch bzw. genauer die Filets von den Flankengräten des Grätengerüsts zu lösen bzw. freizuschneiden. Dazu sind die rotierend antreibbaren Kreismesser in einem geeigneten Winkel zu der natürlichen Struktur der Flankengräten positioniert. Durch den Transport der Fische entlang des Transportweges, auf dem die Kreismesser liegen, dringen die Kreismesser von beiden Seiten in den Fisch ein, und zwar zwischen den Flankengräten und den abzulösenden Filets oberhalb der Flankengräten, so dass die Filets bis an die Haupt- bzw. Mittelgräte heran abgelöst werden.

Als Flankengräten werden solche Gräten bzw. Speichen bezeichnet, die den Bauchraum bzw. die Bauchhöhle umgeben bzw. sich bogenförmig um die Bauchhöhle erstrecken. Flankengräten sind an der Haupt- bzw. Mittelgräte des Grätengerüsts angeordnet. Flankengräten sind überwiegend fest zu beiden Seiten der Haupt- bzw. Mittelgräte mit dieser verbunden. Bei dieser Art Flankengräten erstreckt sich zunächst eine so genannte Strunkgräte, die fest mit der Haupt- bzw. Mittelgräte verbunden ist, quer zu dieser, wobei die Strunkgräte in eine so genannte Rippengräte übergeht. Einfach ausgedrückt bilden eine Strunkgräte und eine Rippengräte eine fest an der Haupt- bzw. Mittelgräte angeordnete Flankengräte. Solche Flankengräten, die sich vom dem Schwanz zugewandten Bereich der Haupt- bzw. Mittelgräte bis zum dem Kopf zugewandten Bereich der Haupt- bzw. Mittelgräte erstrecken, weisen eine leichte Wölbung auf, die der Wölbung der Bauchhöhle entspricht bzw. diese umgibt. Der dem Schwanz zugewandte Bereich wird der Einfachheit halber auch Schwanzbereich genannt. Der dem Kopf zugewandte Bereich wird entsprechend auch Kopfbereich genannt. Im Kopfbereich des Fisches bzw. der Haupt- bzw. Mittelgräte sind weitere Flankengräten angeordnet, die nur mit einer Art Gelenk mit der Haupt- bzw. Mittelgräte verbunden sind. Diese Flankengräten, die insbesondere bei Weißfischarten, wie z.B. Kabeljau, vorkommen, weisen eine gegenüber den fest mit der Haupt- bzw. 'Mittelgräte verbundenen Flankengräten eine stärkere Wölbung auf, so dass diese wegen der hochstehenden Form auch "Spidergräten" genannt werden. Diese stark gewölbten bzw. gebogenen Flankengräten haben die Tendenz, während des Ablösevorgangs über die Schneidkante der Kreismesser geschoben zu werden. Beim Ablösen des Fleisches vom Grätengerüst bzw. genauer beim Ablösen der Filets von den Flankengräten durch die Kreismesser besteht die Gefahr, dass die Schneidkante des Kreismessers die über die Schneidkante ragenden, also im Wirk- bzw. Schnittbereich liegenden Grätenbögen insbesondere im nachlaufenden (Kopf-)Bereich der Haupt-bzw. Mittelgräte in einzelne Fragmente zerteilt. Dadurch bleiben Fragmente oder Reste der Gräten im Filet, was eine Nachbearbeitung des Filets erforderlich macht. Zur Vermeidung der Gefahr des Zerteilens der Flankengräten kann die Schnittführung der Kreismesser höher angesetzt werden, wodurch zwar die Gefahr des Zerteilens der Flankengräten reduziert ist. Allerdings führt ein solcher Schnitt zu einer signifikanten Reduzierung der Ausbeute, da mehr Fleisch des Filets einschließlich der vollständigen Flankengräten am Grätengerüst bzw. an der Haupt- bzw. Mittelgräte verbleibt.

Eine solche Vorrichtung mit dem entsprechenden Verfahren ist prinzipiell beispielsweise aus der DE 10 2007 053 905 bekannt. Dieses aus dem Hause der Anmelderin stammende Dokument offenbart eine Vorrichtung mit sämtlichen Merkmalen des Oberbegriffes des Anspruches 1.

Aus der US 5 088 958 ist eine Vorrichtung bekannt zum Abtrennen der Filets von Fischrümpfen, bei der Schneidwerkzeuge aus jeweils Paaren von Kreismessern zum Freischneiden der Bauchspeichen, der Rückenspeichen und der Rippen bzw. seitlichen Wirbelfortsätze Verwendung finden.

Der Erfindung liegt somit die Aufgabe zugrunde, eine einfache Vorrichtung zu schaffen, mittels der Filets schonend und ausbeuteeffizient vom Grätengerüst lösbar sind. Die Aufgabe besteht auch darin, ein entsprechendes Verfahren vorzuschlagen.

Diese Aufgabe wird durch eine Vorrichtung mit den eingangs genannten Merkmalen erfindungsgemäß, dadurch gelöst, dass jedem Kreismesser ein Mittel zugeordnet ist, das zum Niederhalten zumindest einiger der Flankengräten während des Ablösevorgangs des Fleisches vom Grätengerüst ausgebildet und eingerichtet ist. Durch das zusätzliche, jedem Kreismesser zugeordnete Mittel können in den Wirk-bzw. Schnittbereich des Kreismessers ragende Flankengräten, nämlich insbesondere die so genannten "Spidergräten", oder Teile davon wirkungsvoll gegenüber der rotierenden Schneidkante des Kreismessers geschützt werden. Anders ausgedrückt wird ein Abschneiden oder Zerteilen der Flankengräten - bei maximaler Fleischausbeute - beim Ablösevorgang wirksam verhindert. Die beim Ablösevorgang gewonnenen Fleischstücke bzw. Filets sind im schwanzseitigen Bereich und insbesondere auch im kopfseitigen Bereich frei von Fragmenten der Flankengräten, so dass auf eine aufwendige Nacharbeit verzichtet werden kann.

Eine besonders bevorzugte Ausführungsform der Erfindung ist dadurch gekennzeichnet, dass das Mittel zum aktiven Niederhalten von im Kopfbereich des Fisches angeordneten Flankengräten ausgebildet und eingerichtet ist und ein Ableitelement umfasst, das auf der den Flankengräten abgewandten Oberseite des Kreismessers angeordnet und aus einer die Schneidkante des Kreismessers freigebenden Warteposition in eine die Schneidkante des Kreismesser mindestens teilweise abdeckende und der Schneidkante entgegen der Transportrichtung T vorauslaufende Ableitposition und zurück bewegbar ausgebildet und eingerichtet ist. Mit aktiv wird beschrieben, dass das Ableitelement zum Niederhalten bzw. Herunterdrücken der Flankengräten auf die Flankengräten zu bewegbar ist. In Abgrenzung dazu ist ein passives Niederhalten ohne derartige eigene Ableitbewegungen zu verstehen. Durch die Bewegbarkeit des Ableitelementes und insbesondere die Stellung des Ableitelementes in der Ableitposition ist gewährleistet, dass einerseits die scharfe Schneidkante des Kreismessers abgedeckt ist und so die am Kreismesser vorbei transportierten Flankengräten geschützt sind, und andererseits die in den Bereich der Schneideinrichtung einlaufenden Flankengräten im Kopfbereich des Fisches vor dem Auftreffen auf das Kreismesser bzw. deren Schneidkante nach unten unter die Schneidkante gedrückt werden.

Vorteilhafterweise ist das Ableitelement scheibenartig ausgebildet und umfasst einen Grundkörper und einen einstückig mit dem Grundkörper ausgebildeten Ableitkörper, wobei der Ableitkörper aus einem gegenüber dem Grundkörper freigestellten, fingerartigen Vorsprung gebildet ist, der entgegen der Transportrichtung T ausgerichtet ist. Durch den fingerartigen Vorsprung, der auch nasen- oder hakenförmig entgegen der Transportrichtung T über den Wirk- bzw. Schnittbereich der Schneidkante hinausragen kann, wird auf einfache und sichere Weise sichergestellt, dass die Flankengräten in jedem Fall vor dem Auftreffen bzw. Eintreffen in den Wirk- bzw. Schnittbereich des Kreismesser nach unten gedrückt werden. Dieser entgegen der Transportrichtung T weisende Vorsprung hat den weiteren Vorteil, dass dieser in Fischen, bei denen im Kopfbereich keine feste Verbindung zwischen dem abzulösenden Fleisch und den Flankengräten besteht, da das Fleisch durch eine Art Membran von den Flankengräten getrennt ist, ohne schneiden sondern eher durch schaben das Fleisch vom Grätengerüst bzw. genauer von den Flankengräten lösen kann. Da diese Art des Ablösens gegenüber dem Schneiden produktschonender ist, wird zusätzlich eine Qualitätsverbesserung erreicht.

Eine zweckmäßige Weiterbildung der Erfindung zeichnet sich dadurch aus, dass die durch das Ableitelement und das Kreismesser aufgespannten Ebenen parallel zueinander liegen und das Ableitelement relativ zum Kreismesser bewegbar ist. Damit ist eine schnelle und präzise und gleichzeitig stabile Bewegung des Ableitelementes zwischen den genannten Positionen gewährleistet.

Zweckmäßigerweise ist das Ableitelement um einen Schwenkpunkt schwenkbar, der außerhalb des Drehpunktes des Kreismessers liegt. Damit kann durch kleine bzw. geringe Schwenkbewegungen eine ausreichende Verstellung des Ableitelementes zwischen den Positionen erreicht werden.

Vorteilhafterweise ist dem Ableitelement eine Pneumatikzylindereinheit zum Ausüben der Schwenkbewegung um den Schwenkpunkt zugeordnet. Mit der Pneumatikzylindereinheit ist eine ebenso einfache wie zuverlässige Möglichkeit geschaffen, das Ableitelement zu bewegen.

Eine weitere besonders bevorzugte Ausführungsform der Erfindung ist dadurch gekennzeichnet, dass das Mittel zum Niederhalten von im Kopfbereich des Fisches angeordneten Flankengräten ausgebildet und eingerichtet ist und ein Ableitelement umfasst, das auf der den Flankengräten zugewandten Unterseite des Kreismessers angeordnet ist, wobei die Schneidkante des Kreismessers einen größeren Umfang aufweist als das Ableitelement, derart, dass das Kreismesser mit der Schneidkante über das Ableitelement hinausragt. Dieses alternativ und bevorzugt kumulativ zum auf der den Flankengräten abgewandten Oberseite des Kreismessers angeordneten Ableitelementes vorgesehene Ableitelement unterstützt das Ableiten der Flankengräten unter die Schneidkante des Kreismessers. Dieses Ableitelement führt somit zu einem passiven Niederhalten der Flankengräten, da es sich den hochstehenden bzw. in den Wirk- bzw.Schnittbereich des Kreismessers hineinragenden Flankengräten lediglich quasi in den Weg stellt und diese dadurch zu einem Ableiten nach unten unter die Schneidkante zwingt.

Vorteilhafterweise weist das Ableitelement eine größere Dicke auf als das Kreismesser. Damit wird erreicht, dass die Flankengräten möglichst frühzeitig auf das Ableitelement treffen und entsprechend nach unten abgelenkt werden.

Eine zweckmäßige Weiterbildung der Erfindung zeichnet sich dadurch aus, dass das Ableitelement integraler Bestandteil des Kreismesser ist, derart, dass das Ableitelement zusammen mit dem Kreismesser rotierend um den Drehpunkt antreibbar ist. Durch die einstückige Ausbildung von Kreismesser und Ableitelement wird sichergestellt, dass das Ableitelement permanent und positionsgenau in der zum Niederhalten der Flankengräten korrekten Position zum Kreismesser steht. Alternativ hierzu kann das Ableitelement auch separat zum rotierenden Kreismesser feststehend ausgebildet sein, so dass sich das Kreismesser oberhalb des Ableitelements dreht.

Vorzugsweise ist das Ableitelement tellerförmig ausgebildet und konzentrisch zum Kreismesser angeordnet, wobei zwischen dem Kreismesser und dem Ableitelement ein umlaufender, rampenförmiger Übergang zur Bildung eines Ableitwinkels α ausgebildet ist. Dieser rampenförmige Übergang steigt ausgehend vom Kreismesser bzw. der vom Kreismesser definierten Ebene radial nach innen gerichtet zum Ableitelement bzw. zur Ebene des Ableitelementes an. Der Begriff "Ebene" ist in diesem Zusammenhang keine zweidimensionale Ebene im streng mathematischen Sinn, da das Ableitelement eine Materialstäre/Dicke und somit viele Ebenen aufweist, die jedoch alle parallel zueinander und auch parallel zum Kreismesser verlaufen. Durch den radial nach innen ansteigenden Verlauf werden die Flankengräten zuverlässig unter die Schneidkante des Kreismessers geführt.

Die Aufgabe wird auch durch ein Verfahren mit den eingangs genannten Schritten dadurch gelöst, dass zumindest einige der Flankengräten während des Ablösevorgangs des Fleisches vom Grätengerüst durch ein Mittel zum Niederhalten der Flankengräten nach unten gedrückt werden. Das Besondere am erfindungsgemäßen Verfahren besteht darin, dass die sich in Richtung des Kopfes an der Haupt- bzw. Mittelgräte befindlichen Flankengräten und insbesondere die so genannten "Spidergräten", die besonders hochstehend den Wirk- bzw. Schnittbereich des Kreismessers kreuzen würden, vor dem Auftreffen auf die Schneidkante des Kreismessers unter die Schneidkante geleitet werden, wodurch sämtliche Flankengräten vor Beschädigung/Zerteilung geschützt werden. Die weiteren sich daraus ergebenden Vorteile wurden bereits im Zusammenhang mit der Vorrichtung beschrieben, weshalb zur Vermeidung von Wiederholungen auf die entsprechenden Passagen verwiesen wird.

Vorzugsweise werden im Kopfbereich des Fisches angeordnete Flankengräten aktiv durch das Mittel zum Niederhalten nach unten unter die Schneidkante des Kreismessers geleitet, indem ein auf der den Flankengräten abgewandten Oberseite des Kreismessers angeordnetes Ableitelement aus einer die Schneidkante des Kreismessers freigebenden Warteposition in eine die Schneidkante des Kreismessers mindestens teilweise abdeckende und der Schneidkante entgegen der Transportrichtung T vorauslaufende Ableitposition und zurück bewegt wird. Die Zurückbewegung zurück in die Warteposition erfolgt dabei vorzugsweise erst nach dem vollständigen Beenden des Ablösevorgangs der Filets von den Flankengräten, um die Vorrichtung und insbesondere die Schneideinrichtung für den nächsten Ablösevorgang vorzubereiten.

Vorteilhafterweise wird das Ableitelement getaktet um einen Schwenkpunkt geschwenkt, der außerhalb des Drehpunktes des Kreismessers liegt. Durch die Taktung liegt das Ableitelement nur dann in der Ableitposition, wenn es erforderlich ist. Durch die genannte Verlagerung des Schwenkpunktes ist das Kreismesser bzw. die Schneidkante durch einfache und kurze Bewegungen des Ableitelementes zum einen scharf und zum anderen stumpf gehalten, je nachdem, welcher Zustand gerade benötigt wird.

Eine bevorzugte Weiterbildung der Erfindung zeichnet sich dadurch aus, dass im Kopfbereich des Fisches angeordnete Flankengräten durch das Mittel zum Niederhalten nach unten unter die Schneidkante geleitet werden, indem diese Flankengräten durch den Transport entlang des Transportwegs durch ein auf der den Flankengräten zugewandten Unterseite des Kreismessers angeordnetes Ableitelement nach unten abgeleitet werden.

Die weiteren sich aus den erfindungsgemäßen Verfahrensschritten ergebenden Vorteile wurden bereits im Zusammenhang mit der Vorrichtung, die sich besonders gut zur Durchführung des erfindungsgemäßen Verfahrens eignet, beschrieben, weshalb hierzu ebenfalls auf die entsprechenden Passagen verwiesen wird.

Weitere vorteilhafte und/oder zweckmäßige Merkmale und Weiterbildungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine schematische Darstellung einer erfindungsgemäßen Vorrichtung mit den Mitteln zum Niederhalten zumindest einiger Flankengräten in Warteposition in Draufsicht,
- Fig. 2: die Vorrichtung gemäß Figur 1 in perspektivischer Ansicht,
- Fig. 3: die Vorrichtung gemäß Figur 1 in Seitenansicht,
- Fig. 4: die Vorrichtung gemäß Figur 1 in einer Ansicht von hinten,
- Fig. 5: eine schematische Darstellung einer erfindungsgemäßen Vorrichtung mit den Mitteln zum Niederhalten zumindest einiger Flankengräten in Ableitposition in Draufsicht,
- Fig. 6: die Vorrichtung gemäß Figur 5 in perspektivischer Ansicht
- Fig. 7: die Vorrichtung gemäß Figur 5 in Seitenansicht,
- Fig. 8: die Vorrichtung gemäß Figur 5 in einer Ansicht von hinten, und

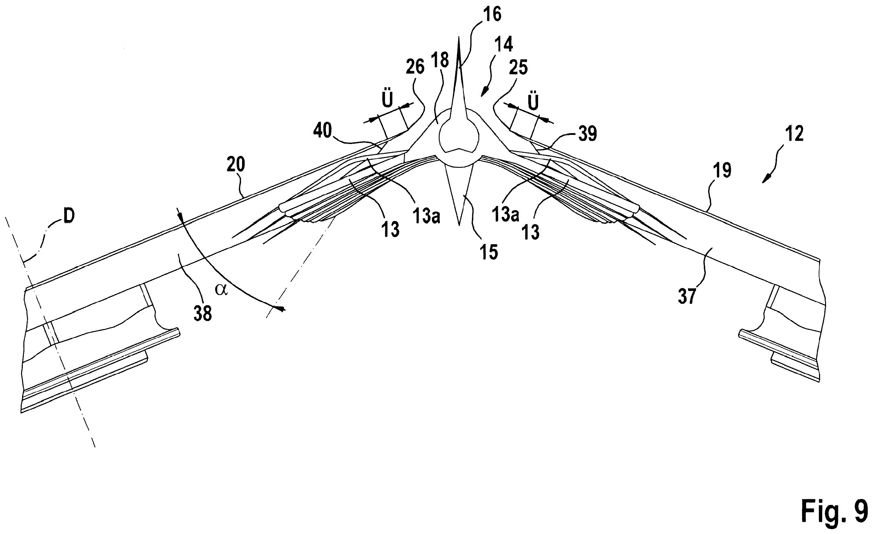

- Fig. 9: eine schematische Darstellung des Grätengerüsts eines zu bearbeitenden Fisches mit einem ausschließlich unterhalb der Kreismesser angeordneten Ableitelement in einer Ansicht von hinten.

Die Erfindung wird anhand einer Vorrichtung zum Ablösen der Filets von den Flankengräten bei Weißfischarten beschrieben. Die Erfindung betrifft jedoch selbstverständlich ganz allgemein Vorrichtungen zum Ablösen von Fleisch von den Flankengräten eines Fisches unterschiedlicher Fischarten. Die erfindungsgemäße Vorrichtung ist als Einzelmaschine dargestellt. Die Vorrichtung ist jedoch grundsätzlich Bestandteil einer Filetiermaschine zum Filetieren von Fischen.

Die in der Zeichnung dargestellte Vorrichtung 10 ist zum maschinellen Bearbeiten von Schwanz voraus in Transportrichtung T auf einem Transportweg transportierten, geköpften und zumindest im Wesentlichen entweideten Fischen ausgebildet und eingerichtet. Mit "im Wesentlichen" wird zum Ausdruck gebracht, dass die Innereien grundsätzlich manuell oder maschinell entfernt sind, es jedoch vorkommen kann, dass sich Reste der Innereien und/oder Blutreste in der Bauchhöhle befinden können, die die Erfindung nicht beeinträchtigen. Die Vorrichtung 10 umfasst ein die Fische längs des Transportwegs förderndes Fördermittel 11 sowie eine Schneideinrichtung 12 zum Ablösen des Fleisches von den Flankengräten 13 und 13a des Grätengerüsts 14 eines Fisches nach dem Freischneiden der Bauch- und Rückenspeichen 15, 16. Das Fördermittel 11 umfasst mindestens einen umlaufend angetriebenen Stützkörper 17. Vorzugsweise mehrere Stützkörper 17, die auch als Transportsattel bekannt sind, sind an einer Kette oder dergleichen umlaufend angetrieben. Der Fisch liegt Bauch unten und Schwanz in Transportrichtung T voraus mit seiner Haupt- bzw. Mittelgräte 18 auf dem Stützkörper 17 auf, so dass sich die Flankengräten 13 seitlich schräg bzw. leicht gewölbt nach unten erstrecken. Entlang des Transportwegs sind an einem Rahmen oder Gestell Einrichtungen, wie insbesondere Maschinengehäuse, Steuer- und/oder Antriebsaggregate oder dergleichen für Bearbeitungseinheiten angeordnet. Eine Bearbeitungseinheit ist die Schneideinrichtung 12, die ein Paar rotierend um einen Drehpunkt D antreibbare Kreismesser 19, 20 umfasst, die auf einander gegenüberliegenden Seiten des Transportwegs angeordnet und in Bezug auf die Position zum Fisch und damit zum Grätengerüst 14 mittels der Steuer- und/oder Antriebsaggregate einstellbar ausgebildet sind. Optional sind der Schneideinrichtung 12 Bearbeitungseinheiten zum Freischneiden der Bauchspeichen und der Rückenspeichen vorgeordnet.

Diese Vorrichtung 10 zeichnet sich erfindungsgemäß dadurch aus, dass jedem Kreismesser 19, 20 ein Mittel 21, 22 zugeordnet ist, das zum Niederhalten zumindest einiger der Flankengräten 13a während des Ablösevorgangs des Fleisches vom Grätengerüst 14 ausgebildet und eingerichtet ist. Flankengräten 13, die fest mit der Haupt- bzw. Mittelgräte 18 verbunden sind, laufen auf dem Transportweg unterhalb der Kreismesser 19, 20 bzw. deren Wirk- bzw. Schnittbereich hindurch. Die Flankengräten 13a auf der dem Schwanz abgewandten Seite des Fisches bzw. Grätengerüsts 14, also am kopfseitigen Ende des Grätengerüsts 14, die nur über eine Art Gelenk mit der Haupt- bzw. Mittelgräte 18 verbunden sind, stehen gegenüber den fest verbundenen Flankengräten 13 hoch und werden durch die Mittel 21, 22 unter die Kreismesser 19, 20 gedrückt, derart, dass die Kreismesser 19, 20 ohne Beschädigung der Flankengräten 13, 13a die Filets vollständig von den Flankengräten 13, 13a ablösen können.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung zusammengefasst oder in einer gemeinsamen Ausführungsform beschrieben werden, auch funktional eigenständig die weiter oben beschriebene Vorrichtung 10 weiterbilden können.

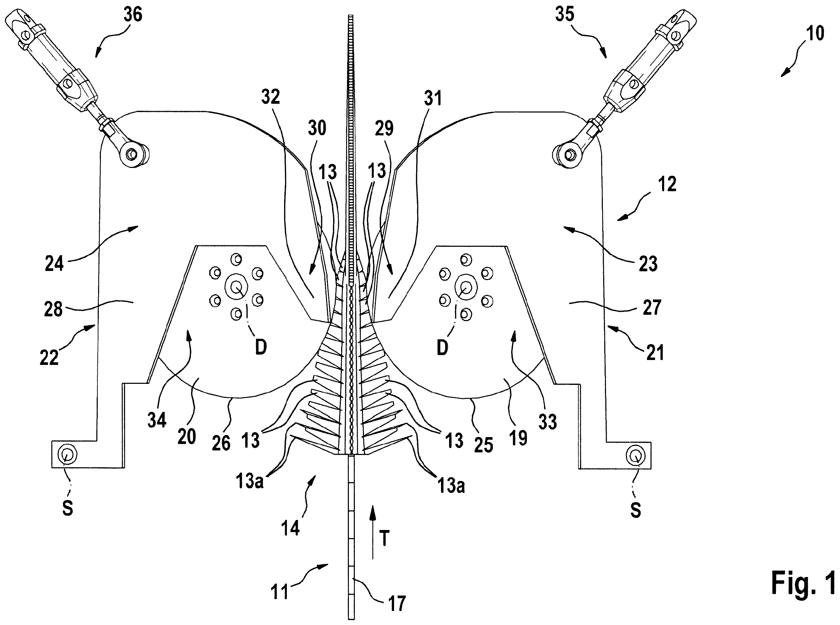

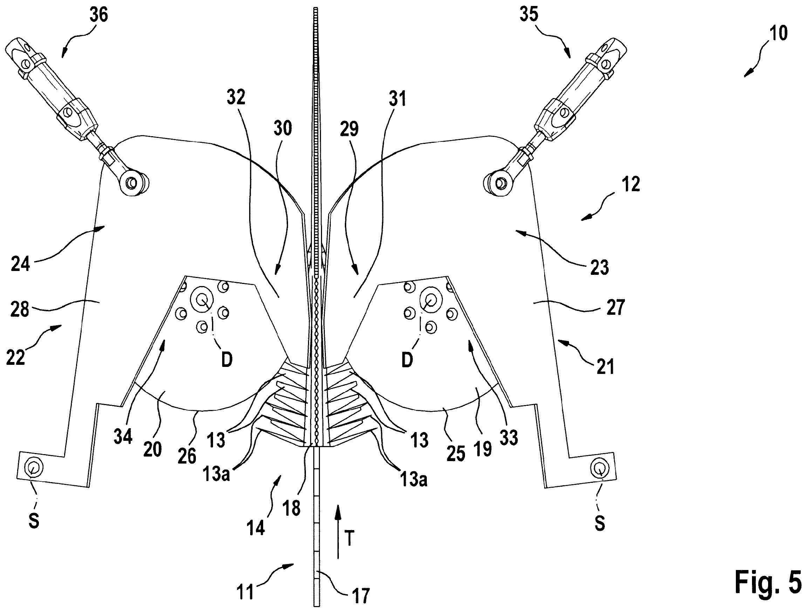

Vorzugsweise ist das Mittel 21, 22 zum aktiven Niederhalten von im Kopfbereich des Fisches angeordneten Flankengräten 13a ausgebildet und eingerichtet und umfasst ein Ableitelement 23, 24, das auf der den Flankengräten 13, 13a abgewandten Oberseite des Kreismessers 19, 20 angeordnet und aus einer die Schneidkante 25, 26 des Kreismessers 19, 20 freigebenden Warteposition (siehe z.B. Figur 1) in eine die Schneidkante 25, 26 des Kreismesser 19, 20 mindestens teilweise abdeckende und der Schneidkante 25, 26 entgegen der Transportrichtung T vorauslaufende Ableitposition (siehe z.B. Figur 5) und zurück bewegbar ausgebildet und eingerichtet ist. Als aktiv wird das Mittel 21, 22 bezeichnet, da es selbst und separat bewegbar zum Niederhalten auf die Flankengräten 13, 13a zu und von diesen weg bewegbar ist. Das Ableitelement 23, 24 deckt die Kreismesser 19, 20 teilweise ab und ist scheibenartig ausgebildet. Die Außenkanten des Ableitelementes 23, 24 sind stumpf ausgebildet. Jedes Ableitelement 23, 24 umfasst einen Grundkörper 27, 28 und einen einstückig mit dem Grundkörper 27, 28 ausgebildeten Ableitkörper 29, 30. Vorzugsweise sind die Ableitelemente 23, 24 einstückig ausgebildet. Es ist jedoch auch eine mehrteilige Ausbildung der Ableitelemente 23, 24 möglich. Der Ableitkörper 29, 30 ist aus einem gegenüber dem Grundkörper 27, 28 freigestellten, fingerartigen Vorsprung 31, 32 gebildet, der entgegen der Transportrichtung T ausgerichtet ist. Anders ausgedrückt weist das Ableitelement 23, 24 eine von einer Kreisform abweichende Grundform mit einer beispielsweise V-förmigen oder U-förmigen Ausnehmung 33, 34 auf. Die Ausnehmung 33, 34 kann auch eine andere Form aufweisen. Entscheidend für die Formgebung des parallel zum Kreismesser 19, 20 liegenden Ableitelementes 23, 24 ist das Vorsehen des vorstehenden und entgegen der Transportrichtung T vorauslaufenden Abschnitts, nämlich des fingerartigen Vorsprungs 31, 32, der vorzugsweise über den Grundkörper 28, 29 so bewegbar ist, dass der Abschnitt die Flankengräten 13a vor dem Eingriff des Kreismessers 19, 20 bzw. dessen Schneidkante 25, 26 in das Fleisch bzw. in die Flankengräten 13a erreicht.

Da sowohl das Kreismesser 19, 20 als auch das Ableitelement 23, 24 scheibenartig ausgebildet sind, spannen die genannten Komponenten jeweils eine Ebene auf. Diese Ebenen von Kreismesser 19, 20 und Ableitelement 23, 24 liegen für jede Paarung Kreismesser 19/Ableitelement 23 und Kreismesser 20/Ableitelement 24 vorzugsweise jeweils parallel zueinander. Das Ableitelement 23, 24 ist relativ zum Kreismesser 19, 20 bewegbar, und zwar derart, dass die Schwenkebene, also die Ebene, in der das Ableitelement 23, 24 bewegt wird, ebenfalls parallel zur Ebene von Kreismesser 19, 20 und Ableitelement 23, 24 liegt. Das Ableitelement 23, 24 ist dafür um einen Schwenkpunkt S schwenkbar, wobei der Schwenkpunkt S außerhalb des Drehpunktes D der Kreismesser 19, 20 liegt. Vorzugsweise liegt der Schwenkpunkt S bzw. die senkrecht zur Schwenkebene liegende Schwenkachse auch außerhalb der Kreismesser 19, 20, so dass ein Schwenkhebelarm gebildet ist, der größer bzw. länger ist als der Radius der Kreismesser 19, 20. Zum vorzugsweise getaktet gesteuerten Auslösen der Schwenkbewegung ist jedem Ableitelement 23, 24 ein Schwenkmechanismus zugeordnet. Im gezeigten Ausführungsbeispiel umfasst der Schwenkmechanismus eine Pneumatikzylindereinheit 35, 36. Diese kann aber auch durch andere übliche Betätigungsmechanismen ergänzt oder ersetzt werden. Optional können auch nicht dargestellte Begrenzungsmittel zur Begrenzung des Schwenkweges vorgesehen sei. In weiteren nicht dargestellten Ausführungsformen können das Kreismesser 19, 20 und das Ableitelement 23, 24 optional auch in einem Winkel zueinander stehen. Die Relativbewegung zwischen Kreismesser 19, 20 und Ableitelement 23, 24 kann auch durch eine Linearbewegung realisiert sein.

In einer bevorzugten Weiterbildung der Erfindung ist das Mittel 21, 22 zum Niederhalten von im Kopfbereich des Fisches angeordneten Flankengräten 13a ausgebildet und eingerichtet und umfasst ein Ableitelement 37, 38, das auf der den Flankengräten 13, 13a zugewandten Unterseite des Kreismessers 19, 20 angeordnet ist. Die Schneidkante 25, 26 des Kreismessers 19, 20 weist einen größeren Umfang auf als das Ableitelement 37, 38, derart, dass das Kreismesser 19, 20 mit der Schneidkante 25, 26 über das Ableitelement 37, 38 hinausragt. Dieses Ableitelement 37, 38, das feststehend oder mit dem Kreismesser 19, 20 drehend ausgebildet sein kann, ist scheibenartig bzw. tellerförmig ausgebildet und weist eine Dicke auf, die vorzugswiese dicker bzw. größer ist als die Dicke des Kreismessers 19, 20.

In einer bevorzugten Ausführungsform ist das Ableitelement 37, 38 integraler Bestandteil des Kreismessers 19, 20, indem die Kreismesser 19, 20 und die Ableitelemente 37, 38 zu einer einstückigen Einheit zusammengefasst bzw. miteinander verbunden sind. Diese Einheit ist rotierend um den Drehpunkt D antreibbar. Das scheibenartige bzw. tellerförmige Ableitelement 37, 38 ist konzentrisch zum Kreismesser 19, 20 angeordnet. Durch die unterschiedlichen Durchmesser von Kreismesser 19, 20 zu Ableitelement 37, 38 ist ein Absatz gebildet, der durch einen umlaufenden, rampenförmigen Übergang 39, 40 vorzugsweise stufenlos überbrückt ist. Dieser Übergang 39, 40 ist zur Bildung eines Ableitwinkels α rampenförmig ausgebildet. Anders ausgedrückt steigt der Übergang 39, 40 ausgehend von der Schneidkante 25, 26 radial nach innen an, wobei der Ausgangspunkt des Übergangs 39, 40 zur Bildung eines Überstands Ü des Kreismessers 19, 20 über das Ableitelement 37, 38 gegenüber dem äußeren Umfang der Schneidkante 25, 26 zurückversetzt sein kann. Die Größe des Winkels α ist variabel und hängt von der zu bearbeitenden Fischsorte bzw. deren Anatomie des Grätengerüsts 14 ab. Sie liegt je nach Vorauswahl zwischen 15° und 75° und bevorzugt zwischen 30° und 60°. Die Größe des Überstands Ü der Schneidkante 25, 26 gegenüber dem Ableitelement 37, 38 ist im Vergleich zum Durchmesser von Kreismesser 19, 20 und Ableitelement 37, 38 gering und beträgt bevorzugt weinige mm. Allerdings kann die Größe des Überstands Ü auch beliebig anders gewählt sein.

Im Folgenden wird das erfindungsgemäße Verfahrensprinzip anhand der bevorzugten Ausführungsform, bei der die Mittel 21, 22 sowohl die Ableitelemente 23, 24 als auch die Ableitelemente und 37, 38 umfassen, beschrieben.
Die Fische werden vorzugsweise manuell auf den Stützkörper 17 gesetzt, und zwar Schwanz in Transportrichtung T voraus und Bauch nach unten, so dass der Fisch mit seiner Mittelgräte 18 auf dem Stützkörper 17 aufliegt. Derart ausgerichtet wird der geköpfte und zumindest im Wesentlichen entweidete Fisch, bei dem die Bauchspeichen 15 und Rückenspeichen 16 bereits freigeschnitten sind, in Transportrichtung T längs eines Transportweges mittels des Fördermittels 11 transportiert. Beim Passieren der Schneideinrichtung 12, die auf dem Transportweg liegt, wird das Fleisch von den Flankengräten 13, 13a des Grätengerüsts 14 des Fisches mittels der Schneideinrichtung 12 abgelöst, indem zu beiden Seiten des Fisches jeweils ein rotierendes Kreismesser 19, 20 der Schneideinrichtung 12 in einem geeigneten Winkel zum Grätengerüst 14 zwischen den Flankengräten 13, 13a und dem abzulösenden Fleisch oberhalb der Flankengräten 13, 13a in den Fisch bis zur Haupt- bzw. Mittelgräte 18 des Grätengerüsts 14 eingeführt wird. Dadurch werden die beiden Filets von den Flankengräten 13, 13a freigeschnitten.

Um zu verhindern, dass Flankengräten 13, 13a, nämlich insbesondere solche Flankengräten 13a, die durch ihre Wölbung im Schnittbereich der Kreismesser 19, 20 liegen, zerteilt werden, werden erfindungsgemäß zumindest einige der Flankengräten 13a während des Ablösevorgangs des Fleisches vom Grätengerüst 14 durch ein Mittel 21, 22 zum Niederhalten der Flankengräten 13a nach unten gedrückt. Die Flankengräten 13a werden so weit nach unten gedrückt, dass sie unter die rotierende Schneidkante 25, 26 der Kreismesser 19, 20 geleitet werden.

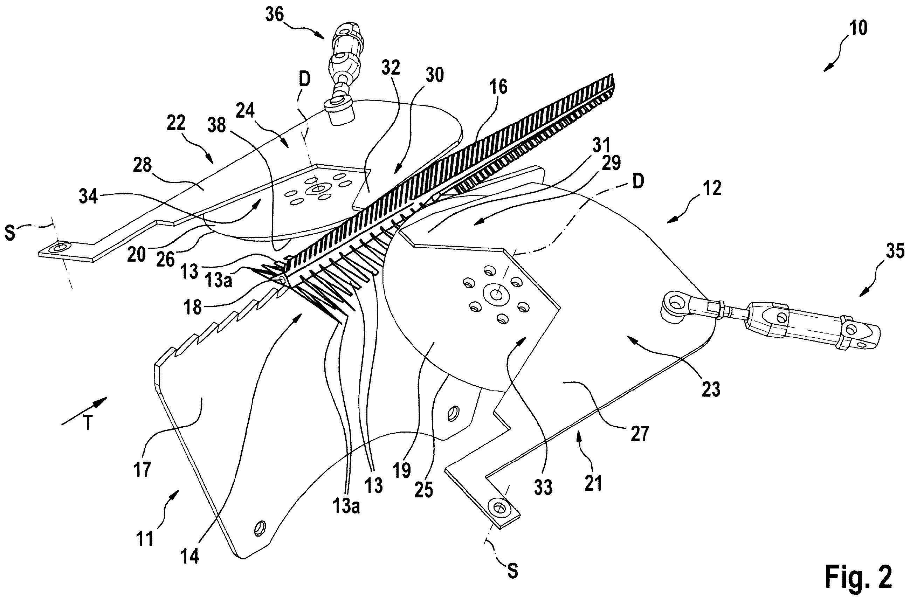

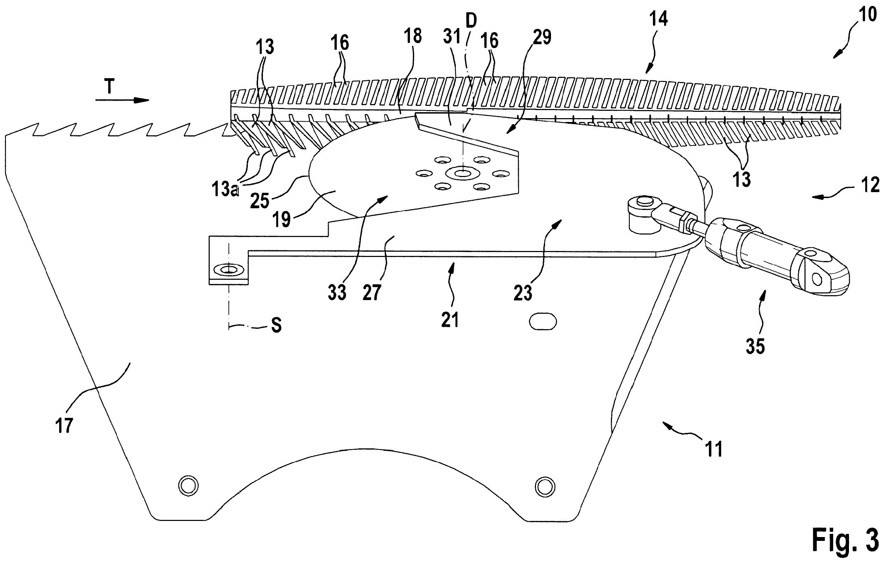

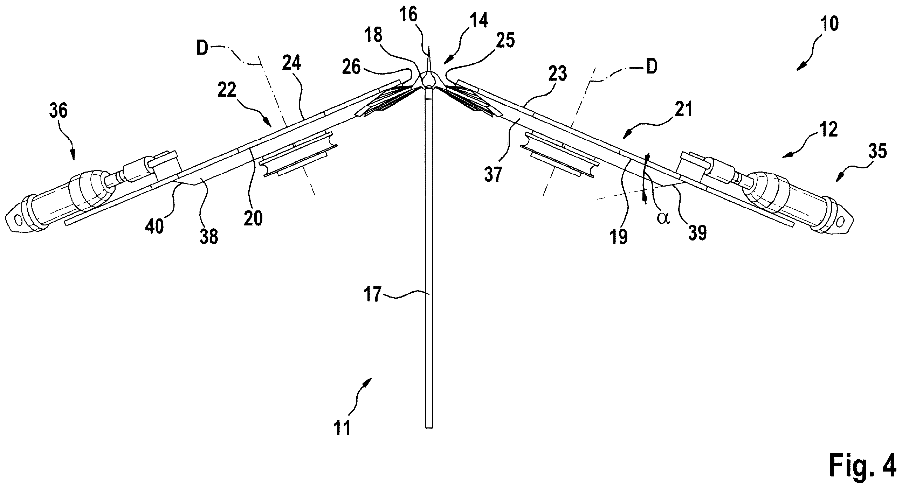

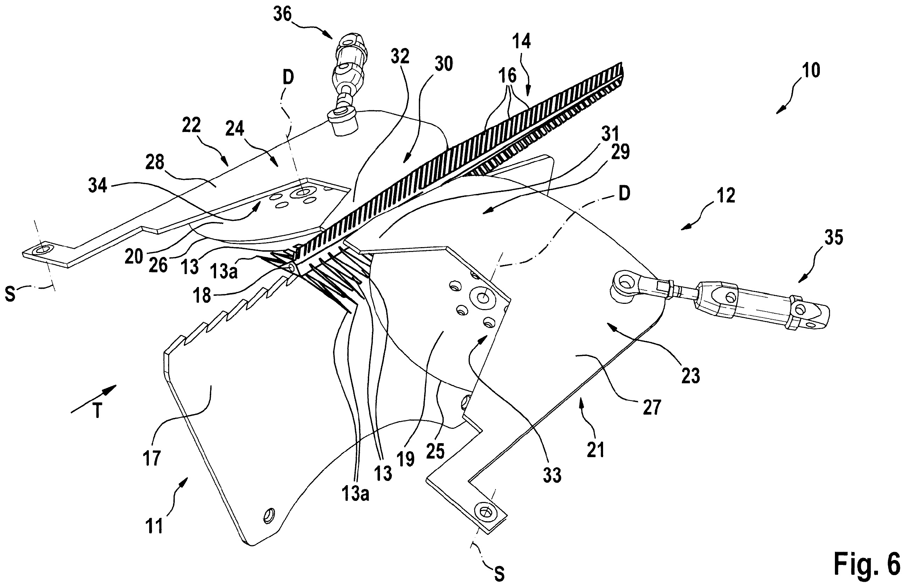

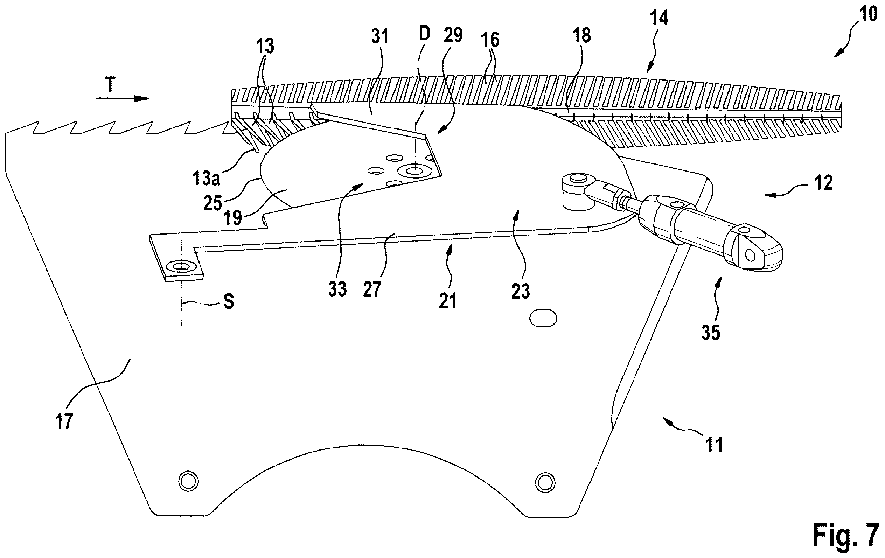

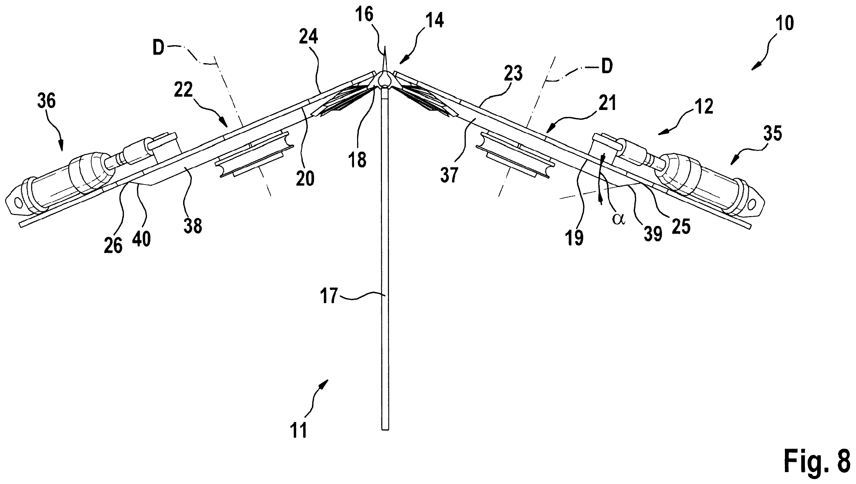

Das Niederhalten bzw. Herunterdrücken der im Kopfbereich sich nach oben in den Schnittbereich der Kreismesser 19, 20 wölbenden Flankengräten 13a kann auf unterschiedliche Weise erfolgen. Bevorzugt ist eine Kombination aus einer Beaufschlagung der betroffenen Flankengräten 13a mit einer Niederhalt- bzw. Ableitkraft von oberhalb des Kreismessers 19, 20 und von unterhalb des Kreismessers 19, 20. Beim Einlaufen der auf dem Stützkörper 17 liegenden Fische befindet sich das oberhalb der Kreismesser 19, 20 angeordnete Ableitelement 23, 24 in einer Warteposition (siehe hierzu insbesondere die Figuren 1 bis 4). In dieser Warteposition ist die Schneidkante 25, 26 des Kreismessers 19, 20 auf der dem Grätengerüst 14 zugewandten Seite frei und löst das Fleisch von den Flankengräten 13, die sich im Schwanzbereich befinden. Beim weiteren Durchlauf des Fisches entlang des Transportweges - kurz bevor der Fisch mit seinen Flankengräten 13, 13a im Kopfbereich den Bereich der Schneideinrichtung 12 erreicht - wird das Ableitelement 23, 24 um die Schwenkachse S geschwenkt, derart, dass das Ableitelement 23, 24 zum einen die Schneidkante 25, 26 auf der dem Grätengerüst 14 zugewandten Seite abdeckt und zum anderen mit seinem fingerartigen Vorsprung 31, 32 entgegen der Transportrichtung T entlang der Flankengräten 13, 13a "fährt". Dadurch, dass der Vorsprung 31, 32 in der Ableitposition (siehe insbesondere die Figuren 5 bis 8) entgegen der Transportrichtung T über die Schneidkante 25, 26 hinausragt, treffen die hochstehenden Flankengräten 13a zunächst auf den Vorsprung 31, 32, der die Flankengräten 13a nach unten zwingt, so dass diese unter die Schneidkante 25, 26 geleitet werden, bevor diese die Flankengräten 13a zerteilen können. Sind die Flankengräten 13a erst einmal unterhalb der Schneidkante 25, 26, werden die Flankengräten 13a durchgängig außerhalb des Schnittbereichs der Kreismesser 19, 20 unter der Schneidkante 25, 26 gehalten. Dieses Niederhalten erfolgt also durch eine Niederhalt- bzw. Ableitkraft von oberhalb der Kreismesser 19, 20. Durch die Bewegung des Vorsprungs 31, 32 entgegen der Transportrichtung T in den Fisch hinein kann zusätzlich der Effekt erzielt werden, das der Vorsprung 31, 32 mit der festen und stumpfen Kante das Fleisch vom Grätengerüst 14 und insbesondere von den Flankengräten 13, 13a löst, da in diesem Bereich bei einigen Fischarten, wie z.B. Kabeljau, keine feste Verbindung zwischen dem Fleisch und den Flankengräten 13, 13a besteht, denn in diesem Bereich sind das Fleisch und die Flankengräten 13, 13a durch eine membranartige Schicht voneinander getrennt.

Zusätzlich erfolgt ein Niederhalten durch eine Niederhalt- bzw. Ableitkraft von unterhalb der Kreismesser 19, 20, indem die sich nach oben in den Schnittbereich der Kreismesser 19, 20 wölbenden Flankengräten 13a durch das Ableitelement 37, 38 nach unten gedrückt werden, bevor die Flankengräten 13a auf die Schneidkante 25, 26 treffen. Durch die ausgehend von dem Kreismesser 19, 20 nach unten vorstehenden Ableitelemente 37, 38 erfolgt eine Art "Freiräumen" des Schnittbereichs, indem die vorstehenden Flankengräten 13a zwangsläufig nach unten ausgelenkt werden.

Das Verfahren kann aber ebenso nur mit einem der beiden Ableitelemente 23, 24 oder 37, 38 ausgeführt werden. Besonders geeignet zur Durchführung des Verfahrens ist die zuvor beschriebene erfindungsgemäße Vorrichtung 10.

Die aktiven Ableitelemente 23, 24 werden getaktet gesteuert bzw. um den Schwenkpunkt S geschwenkt, und zwar zwischen der Warteposition und der Ableitposition. Erst wenn ca. zwei Drittel des Grätengerüsts 14 die Kreismesser 19, 20 passiert haben, werden die Ableitelemente 23, 24 aus der Warteposition in die Ableitposition geschwenkt. Um den optimalen Zeitpunkt zum Einschwenken in die Ableitposition zu finden, kann die Steuerung der Ableitelemente 23, 24 an eine übergeordnete Steuerung angeschlossen sein, die Informationen z.B. zur Fischgröße, zur Transportgeschwindigkeit sowie zu anderen den Ablöseprozess beeinflussenden Parametern kommunizieren kann.

## Patentansprüche

1. Vorrichtung (10), ausgebildet und eingerichtet zum maschinellen Bearbeiten von Schwanz voraus in Transportrichtung T auf einem Transportweg transportierten, geköpften und zumindest im Wesentlichen entweideten Fischen, umfassend ein die Fische längs des Transportwegs förderndes Fördermittel (11) sowie eine Schneideinrichtung (12) zum Ablösen des Fleisches von den Flankengräten (13, 13a) des Grätengerüsts (14) eines Fisches nach dem Freischneiden der Bauch- und Rückenspeichen (15, 16), wobei die Schneideinrichtung (12) ein Paar rotierend um jeweils einen Drehpunkt D antreibbare Kreismesser (19, 20) umfasst, die auf einander gegenüberliegenden Seiten des Transportwegs angeordnet und in Bezug auf die Position zum Fisch und damit zum Grätengerüst (14) einstellbar ausgebildet sind, **dadurch gekennzeichnet, dass** jedem Kreismesser (19, 20) ein Mittel (21, 22) zugeordnet ist, das zum Niederhalten zumindest einiger der Flankengräten (13a) während des Ablösevorgangs des Fleisches vom Grätengerüst (14) ausgebildet und eingerichtet ist.

2. Vorrichtung (10) nach Anspruch 1, **dadurch gekennzeichnet, dass** das Mittel (21, 22) zum aktiven Niederhalten von im Kopfbereich des Fisches angeordneten Flankengräten (13a) ausgebildet und eingerichtet ist und ein Ableitelement (23, 24) umfasst, das auf der den Flankengräten (13, 13a) abgewandten Oberseite des Kreismessers (19, 20) angeordnet und aus einer die Schneidkante (25, 26) des Kreismessers (19, 20) freigebenden Warteposition in eine die Schneidkante (25, 26) des Kreismesser (19, 20) mindestens teilweise abdeckende und der Schneidkante (25, 26) entgegen der Transportrichtung T vorauslaufende Ableitposition und zurück bewegbar ausgebildet und eingerichtet ist.

3. Vorrichtung (10) nach Anspruch 2, **dadurch gekennzeichnet, dass** das Ableitelement (23, 24) scheibenartig ausgebildet ist und einen Grundkörper (27, 28) und einen einstückig mit dem Grundkörper (27, 28) ausgebildeten Ableitkörper (29, 30) umfasst, wobei der Ableitkörper (29, 30) aus einem gegenüber dem Grundkörper (27, 28) freigestellten, fingerartigen Vorsprung (31, 32) gebildet ist, der entgegen der Transportrichtung T ausgerichtet ist.

4. Vorrichtung (10) nach Anspruch 2 oder 3, **dadurch gekennzeichnet, dass** die durch das Ableitelement (23, 24) und das Kreismesser (19, 20) aufgespannten Ebenen parallel zueinander liegen und das Ableitelement (23, 24) relativ zum Kreismesser (19, 20) bewegbar ist.

5. Vorrichtung (10) nach einem der Ansprüche 2 bis 4, **dadurch gekennzeichnet, dass** das Ableitelement (23, 24) um einen Schwenkpunkt S schwenkbar ist, der außerhalb des Drehpunktes D des Kreismessers (19, 20) liegt.

6. Vorrichtung (10) nach Anspruch 5, **dadurch gekennzeichnet, dass** dem Ableitelement (23, 24) eine Pneumatikzylindereinheit (35, 36) zum Ausüben der Schwenkbewegung um den Schwenkpunkt S zugeordnet ist.

7. Vorrichtung (10) nach einem der Ansprüche 1 bis 6, **dadurch gekennzeichnet, dass** das Mittel (21, 22) zum Niederhalten von im Kopfbereich des Fisches angeordneten Flankengräten (13a) ausgebildet und eingerichtet ist und ein Ableitelement (37, 38) umfasst, das auf der den Flankengräten (13, 13a) zugewandten Unterseite des Kreismessers (19, 20) angeordnet ist, wobei die Schneidkante (25, 26) des Kreismessers (19, 20) einen größeren Umfang aufweist als das Ableitelement (37, 38) derart, dass das Kreismesser (19, 20) mit der Schneidkante (25, 26) über das Ableitelement (37, 38) hinausragt.

8. Vorrichtung (10) nach Anspruch 7, **dadurch gekennzeichnet, dass** das Ableitelement (37, 38) eine größere Dicke aufweist als das Kreismesser (19, 20).

9. Vorrichtung (10) nach Anspruch 7 oder 8, **dadurch gekennzeichnet, dass** das Ableitelement (37, 38) integraler Bestandteil des Kreismesser (19, 20) ist, derart, dass das Ableitelement (37, 38) zusammen mit dem Kreismesser (19, 20) rotierend um den Drehpunkt D antreibbar ist.

10. Vorrichtung nach einem der Ansprüche 7 bis 9, **dadurch gekennzeichnet, dass** das Ableitelement (37, 38) tellerförmig ausgebildet und konzentrisch zum Kreismesser (19, 20) angeordnet ist, wobei zwischen dem Kreismesser (19, 20) und dem Ableitelement (37, 38) ein umlaufender, rampenförmiger Übergang (39, 40) zur Bildung eines Ableitwinkels α ausgebildet ist.

11. Verfahren zum maschinellen Bearbeiten von geköpften und zumindest im Wesentlichen entweideten Fischen, bei denen die Bauchspeichen (15) und Rückenspeichen (16) bereits freigeschnitten sind, umfassend die Schritte:
- Transportieren des Fisches Schwanz voraus in Transportrichtung T längs eines Transportweges mittels eines Fördermittels (11), und
- Ablösen des Fleisches von den Flankengräten (13, 13a) des Grätengerüsts (14) des Fisches mittels einer Schneideinrichtung (12), indem zu beiden Seiten des Fisches jeweils ein um einen Drehpunkt D rotierendes Kreismesser (19, 20) der Schneideinrichtung (12) zwischen den Flankengräten (13, 13a) und dem abzulösenden Fleisch oberhalb der Flankengräten (13, 13a) in den Fisch bis zur Haupt- bzw. Mittelgräte (18) des Grätengerüsts (14) eingeführt wird,
**dadurch gekennzeichnet, dass** zumindest einige der Flankengräten (13a) während des Ablösevorgangs des Fleisches vom Grätengerüst (14) durch ein Mittel (21, 22) zum Niederhalten der Flankengräten (13a) nach unten gedrückt werden.

12. Verfahren nach Anspruch 11, **dadurch gekennzeichnet, dass** im Kopfbereich des Fisches angeordnete Flankengräten (13a) aktiv durch das Mittel (21, 22) zum Niederhalten nach unten unter die Schneidkante (25, 26) des Kreismessers (19, 20) geleitet werden, indem ein auf der den Flankengräten (13, 13a) abgewandten Oberseite des Kreismessers (19, 20) angeordnetes Ableitelement (23, 24) aus einer die Schneidkante (25, 26) des Kreismessers (19, 20) freigebenden Warteposition in eine die Schneidkante (25, 26) des Kreismessers (19, 20) mindestens teilweise abdeckende und der Schneidkante (25, 26) entgegen der Transportrichtung T vorauslaufende Ableitposition und zurück bewegt wird.

13. Verfahren nach Anspruch 11 oder 12, **dadurch gekennzeichnet, dass** das Ableitelement (23, 24) getaktet um einen Schwenkpunkt S geschwenkt wird, der außerhalb des Drehpunktes D des Kreismessers (19, 20) liegt.

14. Verfahren nach einem der Ansprüche 11 bis 13, **dadurch gekennzeichnet, dass** im Kopfbereich des Fisches angeordnete Flankengräten (13a) durch das Mittel (21, 22) zum Niederhalten nach unten unter die Schneidkante (25, 26) geleitet werden, indem diese Flankengräten (13a) durch den Transport entlang des Transportwegs durch ein auf der den Flankengräten (13, 13a) zugewandten Unterseite des Kreismessers (19, 20) angeordnetes Ableitelement (37, 38) nach unten abgeleitet werden.

## Claims

1. Apparatus (10), designed and adapted for machine processing of decapitated and at least substantially gutted fish, transported tail-first in transport direction T on a transport path, comprising a conveying means (11) which conveys the fish along the transport path and a cutting device (12) for removing the flesh from the flank bones (13, 13a) of the bone structure (14) of a fish after cutting free the ventral and dorsal spokes (15, 16), wherein the cutting device (12) comprises a pair of circular knives (19, 20) which can be driven so as to rotate about a point of rotation D and which are arranged on opposite sides of the transport path and are designed to be adjustable relative to the position of the fish and thus to the bone structure (14), **characterised in that** each circular knife (19, 20) is allocated a means (21, 22) that is designed and adapted to hold down at least some of the flank bones (13a) during the removal process of the flesh from the bone structure (14).

2. Apparatus (10) according to claim 1, **characterised in that** the means (21, 22) is designed and adapted for actively holding down flank bones (13a) arranged in the head region of the fish and comprises a deflecting element (23, 24) which is arranged on the upper side of the circular knife (19, 20) directed away from the flank bones (13, 13a) and is designed and adapted to be movable out of a waiting position, which uncovers the cutting edge (25, 26) of the circular knife (19, 20), into a deflecting position, which at least partially covers the cutting edge (25, 26) of the circular knife (19, 20) and the cutting edge (25, 26) which runs in front counter to the transport direction T, and back again.

3. Apparatus (10) according to claim 2, **characterised in that** the deflecting element (23, 24) is disc-like and comprises a basic body (27, 28) and a deflecting body (29, 30) designed integrally with said basic body (27, 28), wherein the deflecting body (29, 30) is formed from a finger-like ledge (31, 32) exposed in relation to the basic body (27, 28) which is aligned counter to the transport direction T.

4. Apparatus (10) according to claim 2 or 3, **characterised in that** the planes defined by the deflecting element (23, 24) and the circular knife (19, 20) lie parallel to each other and the deflecting element (23, 24) is movable relative to the circular knife (19, 20).

5. Apparatus (10) according to any one of claims 2 to 4, **characterised in that** the deflecting element (23, 24) is pivotable about a pivot point S which lies outside the point of rotation D of the circular knife (19, 20).

6. Apparatus (10) according to any one of claims 2 to 5, **characterised in that** a pneumatic cylinder unit (35, 36) is assigned to the deflecting element (23, 24) for executing the pivoting movement about the pivot point S.

7. Apparatus (10) according to any one of claims 1 to 6, **characterised in that** the means (21, 22) is designed and adapted for holding down flank bones (13a) arranged in the head region of the fish and comprises a deflecting element (37, 38) which is arranged on the underside of the circular knife (19, 20) directed towards the flank bones (13, 13 a), wherein the cutting edge (25, 26) of the circular knife (19, 20) has a larger circumference that the deflecting element (37, 38) such that the circular knife (19, 20) projects with the cutting edge (25, 26) beyond the deflecting element (37, 38).

8. Apparatus (10) according to claim 7, **characterised in that** the deflecting element (37, 38) has a greater thickness than the circular knife (19, 20).

9. Apparatus (10) according to claim 7 or 8, **characterised in that** the deflecting element (37, 38) is an integral part of the circular knife (19, 20), such that the deflecting element (37, 38) can be driven together with the circular knife (19, 20) so as to rotate about a point of rotation D.

10. Apparatus according to any one of claims 7 to 9, **characterised in that** the deflecting element (37, 38) is designed in the shape of a plate and is arranged concentrically to the circular knife (19, 20), wherein a peripheral, ramp-shaped transition (39, 40) is configured between the circular knife (19, 20) and the deflecting element (37, 38) to form a deflection angle α.

11. Method for machine processing of decapitated and at least substantially gutted fish in which the ventral spokes (15) and dorsal spokes (16) are already cut free, comprising the steps:
- Transporting the fish tail-first in transport direction T along a transport path by a conveying means (11), and
- Removing the flesh from the flank bones (13, 13 a) of the bone structure (14) of the fish by means of a cutting device (12), by inserting into the fish, on either side of the fish between the flank bones (13, 13 a) and the flesh to be removed, one rotating circular knife (19, 20) of the cutting device (12) in each case above the flank bones (13, 13 a) up to the backbone (18) of the bone structure (14),
**characterised in that** during the process of removing the flesh from the bone structure (14) at least some of the flank bones (13a) are pressed downwards by a means (21, 22) for holding down the flank bones (13a).

12. Method according to claim 11, **characterised in that** flank bones (13a) arranged in the head region of the fish are actively guided downwards under the cutting edge (25, 26) of the circular knife (19, 20) by the means (21, 22) for holding down, as a deflecting element (23, 24) arranged on the upper side of the circular knife (19, 20) directed away from the flank bones (13, 13a) is moved out of a waiting position which uncovers the cutting edge (25, 26) of the circular knife (19, 20), into a deflecting position which at least partially covers the cutting edge (25, 26) of the circular knife (19, 20) and the cutting edge (25, 26) which runs in front counter to the transport direction T, and back again.

13. Method according to claim 11 or 12, **characterised in that** the deflecting element (23, 24) is pivoted in a timed manner about a pivot point S which lies outside the point of rotation D of the circular knife (19, 20).

14. Method according to any one of claims 11 to 13, **characterised in that** flank bones (13a) arranged in the head region of the fish are guided downwards under the cutting edge (25, 26) by the means (21, 22) for holding down, as these flank bones (13, 13 a) are deflected downwards, due to the transport along the transport path, by a deflecting element (37, 38) arranged on the underside of the circular knife (19, 20) directed towards the flank bones (13, 13a).

## Revendications

1. Un dispositif (10) conçu et configuré de traitement mécanique de poissons transportés queue par l'avant dans la direction de transport T sur un trajet de transport, étêtés et au moins sensiblement vidés, comprenant un moyen de transport (11) transportant les poissons le long du trajet de transport ainsi qu'un dispositif de coupe (12) destiné à détacher la chair des arêtes des flancs (13, 13a) du squelette d'arêtes (14) d'un poisson après le découpage libératoire des sucs du ventre et du dos (15, 16), dans lequel le dispositif de coupe (12) comprend une paire de lames circulaires (19, 20) pouvant être entraînées en rotation autour d'un axe de rotation D, disposées sur des faces opposées du trajet de transport, et formées de façon réglable rapport à la position du poisson et donc du squelette d'arêtes (14), **caractérisé en ce qu'**un moyen (21, 22) conçu et configuré pour retenir au moins certaines des arêtes des flancs (13a) pendant la procédure de détachement de la chair du squelette d'arêtes (14), est associé à chaque lame circulaire (19, 20).

2. Un dispositif (10) selon la revendication 1, **caractérisé en ce que** le moyen (21, 22) est conçu et configuré pour assurer le maintien actif des arêtes de flanc (13a) se trouvant dans la région de la tête du poisson et **en ce qu'**il comprend un élément de déviation (23, 24) disposé sur le côté supérieur des lames circulaires (19, 20) ne faisant pas face aux arêtes de flanc (13, 13a) et conçu et configuré de façon à pouvoir être déplacé depuis une position d'attente de libération du bord de coupe (25, 26) de la lame circulaire (19, 20) à une position de recouvrement au moins partiel du bord de coupe (25, 26) de la lame circulaire (19, 20) et vers la position de déviation avant du bord de coupe (25, 26) à l'encontre de la direction de transport T et inversement.

3. Un dispositif (10) selon la revendication 2, **caractérisé en ce que** l'élément de déviation (23, 24) est conçu sous la forme d'un plateau et comprend un corps de base (27, 28) ainsi qu'un corps de déviation (29, 30) reliés d'un seul tenant, dans lequel le corps de déviation (29, 30) est constitué d'une saillie indépendante ayant l'aspect d'un doigt (31, 32) faisant face au corps de base (27, 28), orientée à l'encontre de la direction de transport T.

4. Un dispositif (10) selon la revendication 2 ou 3, **caractérisé en ce que** les surfaces couvertes par l'élément de déviation (23, 24) et la lame circulaire (19, 20) sont parallèles les unes par rapport aux autres et **en ce que** l'élément de déviation (23, 24) peut être déplacé par rapport à la lame circulaire (19, 20).

5. Un dispositif (10) selon l'une des revendications 2 à 4, **caractérisé en ce que** l'élément de déviation (23, 24) peut pivoter autour d'un axe de pivotement S se trouvant à l'écart de l'axe de rotation D de la lame circulaire (19, 20).

6. Un dispositif (10) selon la revendication 5, **caractérisé en ce que** l'élément de déviation (23, 24) est muni d'une unité à vérin pneumatique (35, 36) permettant de provoquer le mouvement de pivotement autour de l'axe de pivotement S.

7. Un dispositif (10) selon l'une des revendications 1 à 6 **caractérisé en ce que** le moyen (21, 22) est conçu et configuré pour le maintien des arêtes de flanc (13a) se trouvant dans la région de la tête du poisson et **en ce qu'**il comprend un élément de déviation (37, 38) placé sous la surface inférieure de la lame circulaire (19, 20) orientée vers les arêtes de flanc (13, 13a), dans lequel le bord de coupe (25, 26) de la lame circulaire (19, 20) est de plus grande taille que l'élément de déviation (37, 38), la lame circulaire (19, 20) avec son bord de coupe (25, 26) dépassant ainsi de l'élément de déviation (37, 38).

8. Un dispositif (10) selon la revendication 7, **caractérisé en ce que** l'élément de déviation (37, 38) est plus épais que la lame circulaire (19, 20).

9. Un dispositif (10) selon la revendication 7 ou 8, **caractérisé en ce que** l'élément de déviation (37, 38) fait partie intégrante de la lame circulaire (19, 20), l'élément de déviation (37, 38) pouvant ainsi être pivoté autour de l'axe de rotation D en même temps que la lame circulaire (19, 20).

10. Un dispositif selon l'une des revendications 7 à 9, **caractérisé en ce que** l'élément de déviation (37, 38) est conçu en forme d'assiette et est placé de façon concentrique par rapport à la lame circulaire (19, 20), créant ainsi un tronçon de transition (39, 40) en forme de rampe de pourtour entre la lame circulaire (19, 20) et l'élément de déviation (37, 38) pour formant un angle de déviation α.

11. Un procédé de traitement mécanique de poissons étêtés et au moins sensiblement vidés, dans lesquels les rayons abdominaux (15) et les rayons dorsaux (16) ont déjà été découpées, comprenant les étapes suivantes :
- Transport du poisson queue par l'avant dans une direction de transport T sur un trajet de transport à l'aide d'un moyen de transport (11), et
- séparation de la chair des arêtes des flancs (13, 13a) du squelette d'arêtes (14) du poisson à l'aide d'un dispositif de coupe (12), dans lequel une lame circulaire (19, 20) rotative du dispositif de coupe (12) est insérée respectivement des deux côtés du poisson, entre les arêtes de flanc (13, 13a) et la chair à séparer se trouvant au-dessus des arêtes de flanc (13, 13a), jusqu'aux arêtes principales ou médianes (18) du squelette d'arêtes (14),
**caractérisé en ce que**, au moins certaines des arêtes des flancs (13a) sont repoussées vers le bas à l'aide d'un moyen (21, 22) de maintien des arêtes du flanc (13a) pendant la procédure de détachement de la chair du squelette d'arêtes (14).

12. Un procédé selon la revendication 11, **caractérisé en ce que** des arêtes de flanc (13a) se trouvant dans la région de la tête du poisson sont guidées activement vers le bas sous le bord de coupe (25, 26) de la lame circulaire (19, 20) par le moyen (21, 22) de maintien, suite au déplacement d'un élément de déviation (23, 24) disposé sur le côté supérieur des lames circulaires (19, 20) ne faisant pas face aux arêtes de flanc (13, 13a) depuis une position d'attente de libération du bord de coupe (25, 26) de la lame circulaire (19, 20) vers une position de recouvrement au moins partiel du bord de coupe (25, 26) de la lame circulaire (19, 20) et vers la position d'évacuation avant du bord de coupe (25, 26) à l'encontre de la direction de transport T et inversement.

13. Un dispositif selon la revendication 11 ou 12, **caractérisé en ce que** l'élément de déviation (23, 24) pivote de façon cadencée autour d'un axe de pivotement S se trouvant à l'écart de l'axe de rotation D de la lame circulaire (19, 20).

14. Un procédé selon l'une des revendications 11 à 13, **caractérisé en ce que** les arêtes de flanc (13a) se trouvant dans la région de la tête du poisson sont dirigées vers le bas sous le bord de coupe (25, 26) par le moyen (21, 22) de maintien, dans lequel ces arêtes de flanc (13a) sont dirigées vers le bas par le transport le long du trajet de transport par un élément de déviation (37, 38) positionné sur la surface inférieure de la lame circulaire (19, 20) orientée vers les arêtes de flanc (13, 13a).
